# EUROPÄISCHE PATENTSCHRIFT

(11) **EP 1 082 526 B1**
(45) Veröffentlichungstag und Bekanntmachung des Hinweises auf die Patenterteilung: **17.07.2002**
(21) Anmeldenummer: 99924812.3
(22) Anmeldetag: 19.04.1999
(51) Int. Cl.: F01N 3/20

(54) **VERFAHREN UND VORRICHTUNG ZUR REINIGUNG VON STICKOXID (NOx) ENTHALTENDEM ABGAS EINES VERBRENNUNGSMOTORS**
METHOD AND DEVICE FOR PURIFYING EXHAUST GAS OF AN INTERNAL COMBUSTION ENGINE CONTAINING NITROGEN OXIDE (NOx)
PROCEDE ET DISPOSITIF DE PURIFICATION D'UN GAZ D'ECHAPPEMENT, CONTENANT DE L'OXYDE D'AZOTE (NOx), D'UN MOTEUR A COMBUSTION

(30) Priorität: 22.04.1998 DE 19817994
(43) Veröffentlichungstag der Anmeldung: 14.03.2001
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE); MAUS, Wolfgang, D-51429 Bergisch Gladbach (DE)
(74) Vertreter: Kahlhöfer, Hermann, Dipl.-Phys.
(86) Internationale Anmeldenummer: EP9902623
(87) Internationale Veröffentlichungsnummer: WO9954601

(56) Entgegenhaltungen:
- EP-A- 0 554 766
- WO-A-83/00057
- WO-A-94/27035
- DE-A- 3 615 021
- DE-A- 4 003 515
- US-A- 5 369 956

## Beschreibung

Die vorliegende Erfindung betrifft ein Verfahren und eine Vorrichtung zur Reinigung von Stickoxid (NO_{X}) enthaltendem Abgas eines Verbrennungsmotors, welcher mindestens einen Brennraum mit einem Abgasauslaß umfaßt, an den ein Abgasstrang mit einer Abgasleitung und mindestens einem katalytischen Konverter angeschlossen ist.

Bei der Verbrennung von Kohlenwasserstoffen, wie sie beispielsweise in Benzin vorkommen, mit Luft in einem Verbrennungsmotor, insbesondere einem Dieseloder Ottomotor, entstehen neben den Hauptverbrennungsprodukten Kohlenstoffdioxid und Wasserdampf auch Nebenprodukte und Schadstoffe. Dies sind im wesentlichen Kohlenwasserstoffe (HC), Kohlenstoffmonoxid (CO) und Stickoxide (NO_{X}). Der Gehalt der Abgase an diesen Schadstoffen hängt insbesondere von dem Luft/Kraftstoffverhältnis ab, das im Verbrennungsmotor vorliegt. Bei kleinen Verhältnissen Luft/Kraftstoff spricht man von einer "fetten" Gemischzusammensetzung (Luftunterschuß); bei großen Verhältnissen Luft/Kraftstoff von einer "mageren" Gemischzusammensetzung (Luftüberschuß).

Es ist bekannt, daß bei Luftunterschuß das Abgas relativ viel CO und HC enthält, während bei Luftüberschuß CO und HC fast vollständig oxidiert werden können. Der Gehalt an NO_{X} durchläuft ein Maximum im Bereich leicht magerer Gemischzusammensetzung. In diesem Bereich liegt aber auch für Verbrennungsmotoren, insbesondere für Ottomotoren, ein Optimum des spezifischen Verbrauches. Werden also beispielsweise Ottomotoren auf optimal niedrigen Verbrauch eingestellt, liegen hohe NO_{X}-Konzentrationen neben mäßigen CO- und HC-Konzentrationen im Abgas vor.

Insbesondere die Entwicklung der Verkehrsdichte in Ballungsräumen hat dazu geführt, daß die Gesetzgeber zunächst in den USA, später in Europa und der Bundesrepublik Deutschland, die Emission der Schadstoffe CO, HC und NO_{X} limitiert haben. Die derzeit geltenden Grenzen, insbesondere für NO_{X}, sind durch sogenannte Primärmaßnahmen, also durch eine Optimierung des Verbrennungsablaufes zur Vermeidung der Bildung von Schadstoffen, insbesondere von thermischem NO_{X}, nicht einzuhalten. Daher werden sogenannte Sekundärmaßnahmen, insbesondere die katalytische Abgasreinigung, zur Erhaltung dieser Grenzen eingesetzt. Je nach verwendetem katalytischen Konverter lassen sich zwar bei einem stöchiometrischen Luft/Kraftstoffverhältnis hohe Umsetzungen für alle drei der eingangs genannten Schadstoffkomponeten erreichen, jedoch ist bei Ottomotoren mit mageren Gemischen und generell bei Dieselmotoren der NO_{X}-Anteil nicht ohne Zusatzmaßnahmen umsetzbar.

Dazu ist beispielsweise aus der DE 40 03 515 A1 bekannt, daß zur Reduzierung des NO_{X} zu N₂ ein Reduktionsmittel aus einem Reduktionsmittelreservoir über eine Reduktionsmittelleitung in den Abgasstrang eingeleitet und mit dem darin strömenden Abgas vermischt wird. Anschließend wird dann das Abgas-Reduktionsmittel-Gemisch einem katalytischen Konverter zur katalytischen Umsetzung des NO_{X} zugeführt.

Hierbei ist allerdings aufgrund schwankend auftretender NO_{X}-Konzentrationen im Abgas ein stöchiometrisches Verhältnis zwischen NO_{X} und Reduktionsmittel nur schwer erzielbar: einerseits führt eine kontinuierliche Mengendosierung von Reduktionsmittel in Höhe auftretender NO_{X}-Maxima unterhalb der NO_{X}-Maxima zu einem unerwünschten Ausstoß von Reduktionsmittel im Abgas; andererseits führt eine kontinuierliche Mengendosierung von Reduktionsmittel beispielsweise in Höhe eines NO_{X}-Mittelwertes bei den darüber auftretenden NO_{X}-Konzentrationen im Abgas zu einem unerwünschten NO_{X}-Ausstoß.

Zur Lösung dieser Problematik, insbesondere zur Minimierung der Verluste von Reduktionsmittel, sind katalytische Konverter entwickelt worden, deren Beschichtung sich vollsaugen kann, also eine Speicherkapazität für Reduktionsmittel und/oder NO_{X} aufweist. Unter Verwendung eines solchen katalytischen Konverters kann das Reduktionsmittel etwa mit einer mittleren Menge kontinuierlich in den. Abgasstrang eingeleitet werden. Auftretende Überdosierungen des Reduktionsmittel beispielsweise werden dann im katalytischen Konverter gespeichert und bei später auftretenden NO_{X}-Maxima abgegeben und umgekehrt. Diese Vorgehensweise erfordert jedoch zur ausreichenden Speicherung einen katalytischen Konverter mit einem großen Speichervolumen.

Der Erfindung liegt die Aufgabe zugrunde, Maßnahmen zur verbesserten Reinigung von Stickoxid (NO_{X}) enthaltendem Abgas eines Verbrennungsmotors anzugeben, die insbesondere auch bei kleinem Speichervolumen eines katalytischen Konverters wirksam sind.

Diese Aufgabe wird durch ein Verfahren gemäß Anspruch 1 und durch eine Vorrichtung gemäß Anspruch 13 gelöst. Vorteilhafte Ausgestaltungen und Weiterbildungen sind in den jeweils abhängigen Ansprüchen beschrieben.

Dazu wird erfindungsgemäß ein Reduktionsmittel dem in einem Abgasstrang strömenden Abgas in Abhängigkeit von der NO_{X}-Erzeugung des Verbrennungsmotors mittels wenigstens einer Dosiereinrichtung und weiterer Steuermittel mehrmalig portioniert zu dem jeweiligen Ausstoß an Abgas aus jedem Brennraum und in an die jeweils erzeugten Mengen von NO_{X} angepaßten Portionen zudosiert, insbesondere synchron und/oder phasenverschoben zum Arbeitstakt der Einzelbrennräume oder synchron und/oder phasenverschoben zu einem kompletten Arbeitstakt des Verbrennungsmotors. Eine solche Zudosierung vermeidet fast vollständig Überdosierungen des Reduktionsmittels im Abgas, wodurch etwa ein stöchiometrisches Verhältnis zwischen NO_{X} und Reduktionsmittel erzielt und in vorteilhafter Weise die Reinigung von NO_{X} enthaltendem Abgas eines Verbrennungsmotors verbessert wird.

Bevorzugt weist zudem der Verbrennungsmotor eine elektronische Motorsteuerung auf, die aus zur Steuer- und/oder Regelung des Verbrennungsmotors vorhandenen und/oder ankommenden Daten und Meßwerten auch Signale zur Steuer- und/oder Regelung der Dosiereinrichtung erzeugt, die mittels einer elektrischen Verbindung übertragbar sind. Die Meßwerte stammen beispielsweise von Meßsonden, welche beispielsweise vor und hinter einem im Abgasstrang befindlichen katalytischen Konverter angeordnet sind, wobei erstere insbesondere NO_{X}- und NH₃-Meßwerte und letztere insbesondere NH_{X}-, NH₃- und NO-Meßwerte an die elektronische Motorsteuerung übermitteln. Dadurch sind in vorteilhafter Weise insbesondere ein gegebenenfalls auftretender Ammoniakschlupf sowie eine NO-Restemission erkennbar und mittels der elektronischen Motorsteuerung korrigierbar. Der erfindungsgemäß bevorzugt zur Reinigung des Abgases verwendete katalytische Konverter muß daher in vorteilhafter Weise nur im Umfang von Regelschwankungen NO_{X} und/oder Reduktionsmittel speichern, wozu kein großes Speichervolumen erforderlich ist.

Vorzugsweise wird fluides Ammoniak als Reduktionsmittel verwendet, welches in einem Reduktionsmittelreservoir mitgeführt und bedarfsweise in. den Abgasstrang eingeleitet wird. Alternativ kann das Reduktionsmittel auch als gespeicherter Vorläufer, beispielsweise Harnstoff, im Reduktionsmittelreservoir mitgeführt werden und bedarfsweise, insbesondere pyrolytisch, hergestellt und anschließend als Fluid in den Abgasstrang eingeleitet werden.

Die Dosiereinrichtung, welche insbesondere mindestens ein Dosierventil aufweist, ist bevorzugt zwischen Reduktionsmittelleitung und Abgasstrang angeordnet. Indem das Reduktionsmittel unter einem konstanten Druck in der Reduktionsmittelleitung anliegt, können die Portionen des zuzudosierenden Reduktionsmittels in vorteilhafter Weise allein über die Öffnungszeiten der Dosiereinrichtung, beziehungsweise über die Öffnungszeiten eines jeden Dosierventils, bestimmt werden. Die Steuerund/oder Regelung der Öffnungszeiten der Dosiereinrichtung erfolgt durch die in der elektronischen Motorsteuerung erzeugten Signale in Abhängigkeit der dort vorhandenen Daten und Meßwerte, insbesondere verbrauchsabhängig zu einer Kraftstoffzufuhr. Dadurch läßt sich erfindungsgemäß bevorzugt etwa das jeweils benötigte stöchiometrische Verhältnis zwischen Schadstoffkomponente NO_{X} und Reduktionsmittel Ammoniak im Abgas erzielen.

Die Einleitung des Reduktionsmittels aus dem Reduktionsmittelreservoir erfolgt also beispielsweise über die Reduktionsmittelleitung und das Dosierventil. Der konstante Druck in der Reduktionsmittelleitung wird durch Mittel zur Druckerzeugung, insbesondere eine Pumpe, erzeugt. Die Dosierventile sind in vorteilhafter Weise so ausgebildet, daß sie ein sicheres Vermischen des Reduktionsmittels im Abgas gewährleisten, beispielsweise durch Zerstäuberdüsen als Austrittsöffnungen.

Erfindungsgemäß besonders bevorzugt wird das Reduktionsmittel jeweils am Abgasauslaß eines jeden Brennraumes des Verbrennungsmotors eingeleitet und mit dem Abgas vermischt. Durch eine solche, mit dem jeweiligen Ausstoß an Abgas aus jedem Brennraum synchrone und/oder phasenverschobene Einleitung des Reduktionsmittels lassen sich, insbesondere auch bei mageren Gemischen und unter Berücksichtigung auftretender NO_{X}-Maxima im Abgas, die Verluste von Reduktionsmittel minimieren und die Zudosierung von Reduktionsmittel bedarfsgerecht gestalten, da die Steuer- und/oder Regelungfrequenz der Dosierventile jeweils nur synchron und/oder phasenverschoben dem Zyklus eines Brennraums angepaßt zu sein braucht.

Alternativ und/oder kumulativ wird das Reduktionsmittel gemeinsam für das Abgas aller Brennräume in die Abgasleitung eingeleitet und mit dem Abgas vermischt. Die Einleitung des Reduktionsmittels in die Abgasableitung zeichnet sich dadurch aus, daß hier zur Erzielung eines etwa stöchiometrischen Verhältnisses zwischen Reduktionsmittel und Stickoxiden (NO_{X}) das Ammoniak insbesondere mit weniger apperativen Aufwand dafür aber mit einer höheren, an die Zyklen aller Brennräume angepaßten, Steuer- und/oder Regelungsfrequenz des mindestens einen Dosierventils in das Abgas eingeleitet werden kann.

Die insgesamt bei einem Arbeitstakt benötigte Menge an Ammoniak kann natürlich je nach Bedarf, z.B. abhängig von Drehzahl und Last, in einem oder mehreren über den Takt verteilten Dosiervorgängen zugeführt werden.

Weitere Merkmale, Vorteile und Ausgestaltungen der vorliegenden Erfindung werden anhand zweier, lediglich exemplarischer, Ausführungsbeispiele anhand der Zeichnung beschrieben.

Es zeigen:
- Fig. 1: eine erste, besonders bevorzugte, Ausführungsform der vorliegenden Erfindung und
- Fig. 2: eine zweite Ausführungsform der vorliegenden Erfindung.

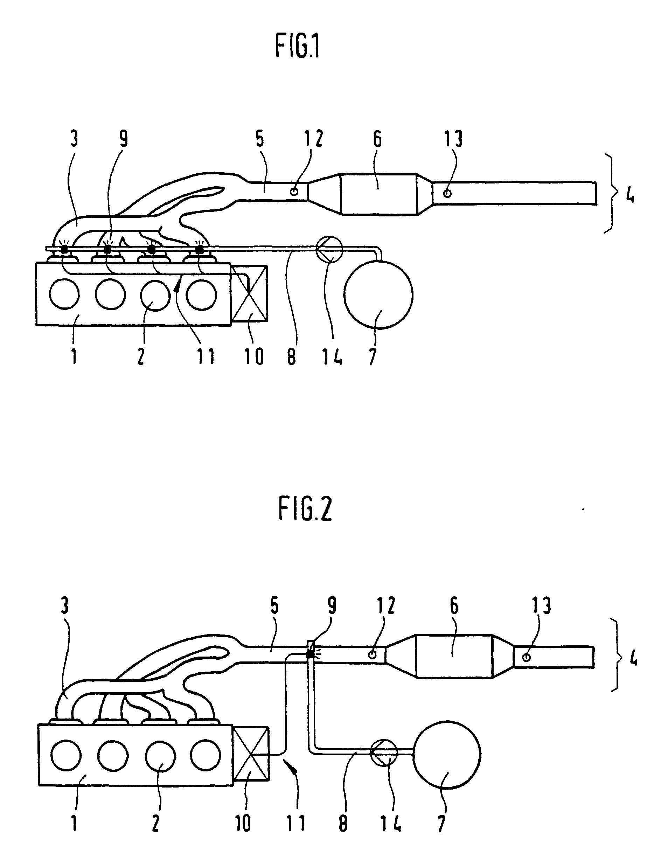

Fig. 1 zeigt einen Verbrennungsmotor 1, welcher vier Brennräume 2 umfaßt, wie dies beispielsweise für einen benzingetriebenen Otto-Motor oder einen Dieselmotor typisch ist. An jeden der vier Brennräume 2 schließt sich ein Abgasauslaß 3 an, der in einen Abgasstrang 4 mündet, welcher mindestens eine Abgasleitung 5 und einen katalytischen Konverter 6 umfaßt, welcher vorzugsweise eine geringe Speicherkapazität im Umfang von Regelschwankungen für NO_{X} und/oder Reduktionsmittel aufweist. Vor dem katalytischen Konverter 6 ist wenigstens eine erste Meßsonde 12 zur Erfassung insbesondere von NO_{X}- oder NH₃-Meßwerte, hinter dem katalytischen Konverter 6 wenigstens eine zweite Meßsonde 13 zur Erfassung insbesondere von NO_{X}-, NH₃- oder NO-Meßwerte, angeordnet. Über eine Reduktionsmittelzuleitung 8 ist als Reduktionsmittel Ammoniak aus einem Reduktionsmittelreservoir 7 mittels einer Pumpe 14 jeweils am Abgasauslaß 3 eines jeden Brennraums 2 des Verbrennungsmotors 1 in den Abgasstrang 4 einleitbar und vermischbar, wobei zwischen der Reduktionsmittelleitung 8 und jedem Abgasauslaß 3 ein Dosierventil 9 angeordnet ist, welche so ausgebildet sind, daß sich das Ammoniak mit dem Abgas vermischt. Die Dosierventile 9 sind über eine elektrische Verbindung 11 mit der Motorsteuerung 10 verbunden.

In den Brennräumen 2 wird Stickoxid (NO_{X}) enthaltendes Abgas erzeugt. Synchron mit dem jeweiligen Ausstoß an Abgas aus den Brennräumen 2 wird das Reduktionsmittel Ammoniak in an die erzeugten Mengen an NO_{X} angepaßten Portionen dem noch heißem Abgas jeweils am Abgasauslaß 3 eines jeden Brennraums 2 des Verbrennungsmotors 1 über die Dosierventile 9 zudosiert. Aufgrund mangelnder Verweilzeiten und/oder Abgastemperaturen unter 920°C kann eine selektive nichtkatalytische Reduktion (SNCR) kaum erfolgen. Die Reduktion der NO_{X} zu N₂ erfolgt deshalb selektiv katalytisch (SCR) im katalytischen Konverter 6, vorzugsweise bei einer Abgastemperatur zwischen 300°C und 500°C. Das Ammoniak selbst liegt unter einem von der Pumpe 14 erzeugten konstanten Druck kontinuierlich in der Reduktionsmittelleitung 8 vor, so daß die Portionen des zuzudosierenden Ammoniaks lediglich über die Öffnungszeiten der Dosierventile 9 bestimmbar und, beispielsweise bezogen auf einen Ausstoß an Abgas, einmalig hochportioniert und/oder mehrmalig, niedrigportioniert, vorzugsweise mittels Piezotechnik, einleitbar sind. Die Signale zur Steuer- und/oder Regelung der Öffnungszeiten der Dosierventile 9 werden aus zur Steuer- und/oder Regelung des Verbrennungsmotors 1 vorhandenen und/oder ankommenden Daten und Meßwerten erzeugt, insbesondere verbrauchsabhängig zu einer Kraftstoffzufuhr, wobei die in der Motorsteuerung 10 ankommenden Daten und Meßwerte teilweise von den vor und hinter dem katalytischen Konverter 6 angeordneten Meßsonden 12, 13 stammen.

Fig. 2 zeigt einen Verbrennungsmotor 1 wie in Figur 1 mit dem Unterschied, daß Ammoniak als Redukionsmittel über eine Reduktionsmittelzuleitung 8 gemeinsam für das Abgas aller Brennräume 2 in die Abgasleitung 5 einleitbar ist. In der Reduktionsmittelleitung 8 liegt das Reduktionsmittel gleichfalls unter einem von einer Pumpe 14 erzeugten konstanten Druck an. Die erfindungsgemäß bevorzugte Zudosierung des Reduktionsmittels zu dem Abgas in Abhängigkeit von der NO_{X}-Erzeugung des Verbrennungsmotors 1 synchron und/oder phasenverschoben mit dem Ausstoß an gemeinsamem Abgas aller Brennräume 2 und in an die erzeugten Mengen an NO_{X} angepaßten Portionen erfolgt über ein zwischen der Reduktionsmittelleitung 8 und der Abgasleitung 5 angeordnetes Dosierventil 9, welches so ausgebildet ist, daß sich das Ammoniak mit dem Abgas vermischt. Sofern die erzeugten Mengen an NO_{X} im Abgas konstant sind, wird das Reduktionsmittel kontinuierlich in den Abgasstrom eingeleitet; sofern Schwankungen auftreten, diskontinuierlich. Eine Einleitung erfolgt wiederum über die Öffnungszeiten des Dosierventils 9, welche mittels aus zur Steuer- und/oder Regelung des Verbrennungsmotors 1 vorhandenen Daten und Meßwerten erzeugter Signale gesteuert bzw. geregelt werden.

Durch zeitlich und mengenmäßig angepaßte Zudosierung von Ammoniak in das Abgas kann somit die Emission von NO_{X} und Ammoniak bei kleinem Speichervolumen eines nachgeschaltenen katalytischen Konverters gering gehalten werden.

Das erfindungsgemäße Verfahren und die Vorrichtung zur Reinigung von Stickoxid (NO_{X}) enthaltendem Abgas eines Verbrennungsmotors zeichnet sich durch seine relative technische Einfachheit aus; ferner müssen seine Endprodukte nicht entsorgt werden, da die im Abgas enthaltenen Stickoxide (NO_{X}) unter Zugabe von Ammoniak (NH₃) oder über die Kette Harnstoff-Ammoniak durch die Wirkung eines katalytischen Konverters zu Wasser (H₂O) und molekularem Stickstoff (N₂) umgesetzt werden.

### Bezugszeichenliste

- 1: Verbrennungsmotor
- 2: Brennraum
- 3: Abgasauslaß
- 4: Abgasstrang
- 5: Abgasleitung
- 6: katalytischer Konverter
- 7: Reduktionsmittelreservoir
- 8: Reduktionsmittelleitung
- 9: Dosierventil
- 10: elektronische Motorsteuerung
- 11: elektrische Verbindung
- 12: erste Meßsonde
- 13: zweite Meßsonde
- 14: Pumpe

## Patentansprüche

1. Verfahren zur Reinigung von Stickoxid (NO_{X}) enthaltendem Abgas eines Verbrennungsmotors (1), welcher mindestens einen Brennraum (2) mit einem Abgasauslaß (3) umfaßt, an den ein Abgasstrang (4) mit einer Abgasleitung (5) und mindestens einem katalytischen Konverter (6) angeschlossen ist, wobei eine Menge Reduktionsmittel aus einem Reduktionsmittelreservoir (7) über eine Reduktionsmittelleitung (8) in den Abgasstrang (4) eingeleitet und mit dem darin strömenden Abgas vermischt wird, und das Abgas-Reduktionsmittel-Gemisch anschließend dem katalytischen Konverter (6) zur katalytischen Umsetzung des NO_{X} zugeführt wird, **dadurch gekennzeichnet,**
**daß** die Menge Reduktionsmittel dem Abgas in Abhängigkeit von der NO_{X}-Erzeugung des Verbrennungsmotors (1) mehrmalig portioniert für jeden Ausstoß an Abgas aus jedem Brennraum (2) mittels wenigstens einer Dosiereinrichtung (9) und weiterer Steuermittel und/oder Regelmittel (10, 11, 12, 13) und in an die jeweils erzeugten Mengen an NO_{X} angepaßten Portionen zudosiert wird.

2. Verfahren nach Anspruch 1, **dadurch gekennzeichnet, daß** das Reduktionsmittel mittels wenigstens zweier Dosiereinrichtungen (9), welche zwischen Reduktionsmittelleilung (8) und Abgasstrang (4) angeordnet sind, dem Abgas zudosiert wird.

3. Verfahren nach Anspruch 1 oder 2, **dadurch gekennzeichnet, daß** jede Dosiereinrichtung (9) den Reduktionsmittelfluß in unmittelbarer Nähe der Einleitstelle steuert, wo das Reduktionsmittel dem Abgas zudosiert wird.

4. Verfahren nach einem der vorherigen Ansprüche, wobei der Verbrennungsmotor (1) eine elektronische Motorsteuerung (10) aufweist, **dadurch gekennzeichnet, daß** in der Motorsteuerung (10) aus zur Steuerung und/oder Regelung des Verbrennungsmotors (1) vorhandenen und/oder ankommenden Daten und Meßwerten auch Signale zur Steuerung und/oder Regelung der Dosiereinrichtung (9) erzeugt werden.

5. Verfahren nach einem der vorherigen Ansprüche, **dadurch gekennzeichnet, daß** der katalytische Konverter (6) nur im Umfang von Regelschwankungen NO_{X} und/oder Reduktionsmittel speichert.

6. Verfahren nach einem der vorhergehenden Ansprüche, **dadurch gekennzeichnet, daß** das Reduktionsmittel jeweils am Abgasauslaß (3) eines jeden Brennraumes (2) des Verbrennungsmotors (1) eingeleitet und mit dem Abgas vermischt wird

7. Verfahren nach einem der Ansprüche 1 bis 5, **dadurch gekennzeichnet, daß** das Reduktionsmittel gemeinsam für das Abgas aller Brennräume (2) in die Abgasleitung (5) eingeleitet und mit dem Abgas vermischt wird.

8. Verfahren nach einem der vorhergehenden Ansprüche, **dadurch gekennzeichnet, daß** das Reduktionsmittelreservoir (7) fluides Ammoniak als Reduktionsmittel enthält, welches in den Abgasstrang (4) eingeleitet wird.

9. Verfahren nach einem der Ansprüche 1 bis 7, **dadurch gekennzeichnet, daß** das Reduktionsmittelreservoir (7) einen gespeicherten Vorläufer eines Reduktionsmittels enthält, aus dem das Reduktionsmittel, beispielsweise pyrolytisch, hergestellt und als Fluid in den Abgasstrang (4) eingeleitet wird.

10. Verfahren nach Anspruch 9, **dadurch gekennzeichnet, daß** Harnstoff als gespeicherter Vorläufer des Reduktionsmittels Ammoniak verwendet wird.

11. Verfahren nach einem der vorhergehenden Ansprüche, **dadurch gekennzeichnet, daß** das Reduktionsmittel unter einem konstanten Druck in der Reduktionsmittelleitung (8) anliegt, so daß die Portionen des zuzudosierenden Reduktionsmittels über Öffnungszeiten der Dosiereinrichtung (9) bestimmt werden.

12. Verfahren nach Anspruch 11, **dadurch gekennzeichnet, daß** die Steuerung und/oder Regelung der Öffnungszeiten der Dosiereinrichtung (9) über eine elektrische Verbindung (11) durch die in der elektronischen Motorsteuerung (10) erzeugten Signale in Abhängigkeit der dort vorhandenen und/oder ankommenden Daten und Meßwerte, welche beispielsweise von Meßsonden (12, 13) stammen, erfolgt, insbesondere verbrauchsabhängig zu einer Kraftstoffzufuhr.

13. Vorrichtung zur Reinigung von Stickoxid (NO_{X}) enthaltendem Abgas eines Verbrennungsmotors (1), welcher mindestens einen Brennraum (2) mit einem Abgasauslaß (3) umfaßt, an den ein Abgasstrang (4) mit einer Abgasleitung (5) und mindestens einem katalytischen Konverter (6) angeschlossen ist, wobei ein Reduktionsmittel aus einem Reduktionsmittelreservoir (7) über eine Reduktionsmittelleitung (8) in den Abgasstrang (4) einleitbar und mit dem darin strömenden Abgas vermischbar ist, und wobei das Abgas-Reduktionsmittel-Gemisch anschließend dem katalytischen Konverter (6) zur katalytischen Umsetzung des NO_{X} zuführbar ist, **dadurch gekennzeichnet,**
**daß** wenigstens eine Dosiereinrichtung (9) und Steuermittel und/oder Regelmittel (10, 11, 12, 13) vorhanden sind zur mehrmaligen, portionierten Zudosierung des Reduktionsmittels pro Arbeitstakt zu dem Abgas in Abhängigkeit von der NO_{X}-Erzeugung des Verbrennungsmotors (1).

14. Vorrichtung nach Anspruch 13, **dadurch gekennzeichnet, daß** das Reduktionsmittel mittels wenigstens zweier Dosiereinrichtungen (9), welche zwischen Reduktionsmittelleitung (8) und Abgasstrang (4) angeordnet sind, dem Abgas zudosiert wird.

15. Vorrichtung nach Anspruch 13 oder 14, **dadurch gekennzeichnet, daß** jede Dosiereinrichtung (9), welche insbesondere mindestens ein Dosierventil (9) aufweist, zwischen Reduktionsmittelleitung (8) und Abgasstrang (4) insb. in unmittelbarer Nähe der Eingangsstelle, wo das Reduktionsmittel dem Abgas zudosiert wird angeordnet ist und den Reduktionsmittelfluß steuert.

16. Vorrichtung nach Anspruch 13, **dadurch gekennzeichnet, daß** der katalytische Konverter (6) im Umfang von Regelschwankungen eine geringe Speicherkapazität für NO_{X} und/oder Reduktionsmittel aufweist.

17. Vorrichtung nach Anspruch 13, wobei der Verbrennungsmotor (1) eine elektronische Motorsteuerung (10) aufweist, **dadurch gekennzeichnet, daß** die Dosiereinrichtung (9) durch die elektronische Motorsteuerung (10) und mittels weiterer Steuermittel und/oder Regelmittel (11, 12, 13), insbesondere über eine elektrische Verbindung (11), gesteuert und/oder geregeit wird.

18. Vorrichtung nach Anspruch 17, **dadurch gekennzeichnet, daß** wenigstens eine erste Meßsonde (12) vor und/oder eine zweite Meßsonde (13) hinter dem katalytischen Konverter (6) angeordnet sind, wobei die erste Meßsonde (12) insbesondere NO_{X}- oder NH₃-Meßwerte und die zweite Meßsonde (13) insbesondere NO_{X}-, NH₃- oder NO-Meßwerte an die elektronische Motorsteuerung (10) übermittelt.

19. Vorrichtung nach Anspruch 13, **dadurch gekennzeichnet, daß** das Reduktionsmittelreservoir (7) fluides Ammoniak als Reduktionsmittel enthält, welches in den Abgasstrang (4) eingeleitet wird.

20. Vorrichtung nach Anspruch 13, **dadurch gekennzeichnet, daß** Mittel zur, beispielsweise pyrolytischen, Herstellung von fluidem Ammoniak aus einem gespeicherten Vorläufer, insbesondere aus Harnstoff, vorhanden sind.

21. Vorrichtung nach einem der Ansprüche 13 bis 20, **dadurch gekennzeichnet, daß** das Reduktionsmittel unter einem konstanten Druck in der Reduktionsmittelleitung (8) anliegt, so daß die Portionen des zuzudosierenden Reduktionsmittels über Öffnungszeiten eines jeden Dosierventils (9) bestimmt werden.

22. Vorrichtung nach Anspruch 21, **dadurch gekennzeichnet, daß** der konstante Druck in der Reduktionsmittelleitung (8) durch Mittel zur Druckerzeugung, insbesondere einer Pumpe (14), erzeugt wird.

23. Vorrichtung nach einem der Ansprüche 13 bis 22, **dadurch gekennzeichnet, daß** das Reduktionsmittel aus dem Reduktionsmittelreservoir (7) über die Reduktionsmittelleitung (8) und das Dosierventil (9) jeweils am Abgasauslaß (3) eines jeden Brennraums (2) des Verbrennungsmotors (1) eingeleitet und mit dem Abgas vermischt wird.

24. Vorrichtung nach einem der Ansprüche 13 bis 23, **dadurch gekennzeichnet, daß** das Reduktionsmittel aus dem Reduktionsmittelreservoir (7) über die Reduktionsmittelleitung (8) und das Dosierventil (9) gemeinsam für das Abgas aller Brennräume (2) des Verbrennungsmotors (1) in die Abgasleitung (5) eingeleitet und mit dem Abgas vermischt wird.

## Claims

1. A method of cleaning exhaust gas containing nitrogen oxide (NO_{X}) from an internal combustion engine (1) which includes at least one combustion chamber (2) with an exhaust gas outlet (3) to which is connected an exhaust system (4) with an exhaust pipe (5) and at least one catalytic converter (6), wherein an amount of reducing agent is introduced from a reducing agent reservoir (7) by way of a reducing agent line (8) into the exhaust system (4) and mixed with the exhaust gas flowing therein and the exhaust gas reducing agent mixture is then fed to the catalytic converter (6) for catalytic conversion of the NO_{X}, **characterised in that** the amount of reducing agent is added to the exhaust gas in dependence on the NO_{X} production of the internal combustion engine (1) in multiple portion-wise manner for each discharge of exhaust gas out of the respective combustion chamber (2) by means of at least one metering device (9) and further control means and/or regulating means (10, 11, 12, 13) and in portions adapted to the respectively produced amounts of NO_{X}.

2. A method according to claim 1 **characterised in that** the reducing agent is meteredly added to the exhaust gas by means of at least two metering devices (9) arranged between the reducing agent line (8) and the exhaust system (4).

3. A method according to claim 1 or claim 2 **characterised in that** each metering device (9) controls the flow of reducing agent in the immediate proximity of the intake location where the reducing agent is meteredly added to the exhaust gas.

4. A method according to one of the preceding claims wherein the internal combustion engine (1) has an electronic engine management (10) **characterised in that** signals for controlling and/or regulating the metering device (9) are also produced in the engine management (10) from data and measurement values which are present and/or arriving for control and/or regulation of the internal combustion engine (1).

5. A method according to one of the preceding claims **characterised in that** the catalytic converter (6) stores NO_{X} and/or reducing agent only within the extent of regulating fluctuations.

6. A method according to one of the preceding claims **characterised in that** the reducing agent is respectively introduced at the exhaust gas outlet (3) of each combustion chamber (2) of the internal combustion engine (1) and mixed with the exhaust gas there.

7. A method according to one of claims 1 to 5 **characterised in that** the reducing agent is introduced jointly for the exhaust gas of all combustion chambers (2) into the exhaust pipe (5) and mixed with the exhaust gas.

8. A method according to one of the preceding claims **characterised in that** the reducing agent reservoir (7) contains fluid ammonia as the reducing agent, which is introduced into the exhaust system (4).

9. A method according to one of claims 1 to 7 **characterised in that** the reducing agent reservoir (7) contains a stored precursor of a reducing agent from which the reducing agent is produced, for example pyrolytically, and introduced in the form of fluid into the exhaust system (4).

10. A method according to claim 9 **characterised in that** urea is used as the stored precursor of the reducing agent ammonia.

11. A method according to one of the preceding claims **characterised in that** the reducing agent is applied under a constant pressure in the reducing agent line (8) so that the portions of the reducing agent to be meteredly added are determined by way of opening times of the metering device (9).

12. A method according to claim 11 **characterised in that** control and/or regulation of the opening times of the metering device (9) is effected by way of an electrical connection (11) by the signals produced in the electronic engine management (10) in dependence on the data and measurement values which are present and/or arrive there and which originate for example from measurement probes (12, 13), in particular in dependence on consumption in relation to a fuel feed.

13. Apparatus for cleaning exhaust gas containing nitrogen oxide (NO_{X}) from an internal combustion engine (1) which includes at least one combustion chamber (2) with an exhaust gas outlet (3) to which is connected an exhaust system (4) with an exhaust pipe (5) and at least one catalytic converter (6), wherein a reducing agent can be introduced from a reducing agent reservoir (7) by way of a reducing agent line (8) into the exhaust system (4) and can be mixed with the exhaust gas flowing therein and wherein the exhaust gas reducing agent mixture can be then fed to the catalytic converter (6) for catalytic conversion of the NO_{X}, **characterised in that** there are provided at least one metering device (9) and control means and/or regulating means (10, 11, 12, 13) for multiple portion-wise metered addition of the reducing agent per working cycle to the exhaust gas in dependence on the NO_{X} production of the internal combustion engine (1).

14. Apparatus according to claim 13 **characterised in that** the reducing agent is meteredly added to the exhaust gas by means of at least two metering devices (9) arranged between the reducing agent line (8) and the exhaust system (4).

15. Apparatus according to claim 13 or claim 14 **characterised in that** each metering device (9) which in particular has at least one metering valve (9) is arranged between the reducing agent line (8) and the exhaust system (4), in particular in the immediate proximity of the intake location where the reducing agent is meteredly added to the exhaust gas, and controls the reducing agent flow.

16. Apparatus according to claim 13 **characterised in that** the catalytic converter (6) has within the limits of regulating fluctuations a small storage capacity for NO_{X} and/or reducing agent.

17. Apparatus according to claim 13 wherein the internal combustion engine (1) has electronic engine management (10) **characterised in that** the metering device (9) is controlled and/or regulated by the electronic engine management (10) and by means of further control means and/or regulating means (11, 12, 13), in particular by way of an electrical connection (11).

18. Apparatus according to claim 17 **characterised in that** at least one first measurement probe (12) is arranged upstream of and/or a second measurement probe (13) is arranged downstream of the catalytic converter (6), wherein the first measurement probe (12) communicates in particular NO_{X} or NH₃ measurement values to the electronic engine management (10) and the second measurement probe (13) communicates in particular NO_{X}, NH₃ or NO measurement values to the electronic engine management (10).

19. Apparatus according to claim 13 **characterised in that** the reducing agent reservoir (7) contains fluid ammonia as the reducing agent which is introduced into the exhaust system (4).

20. Apparatus according to claim 13 **characterised in that** there are means for the for example pyrolytic production of fluid ammonia from a stored precursor, in particular urea.

21. Apparatus according to one of claims 13 to 20 **characterised in that** the reducing agent is applied under a constant pressure in the reducing agent line (8) so that the portions of the reducing agent to be meteredly added are determined by way of opening times of the metering device (9).

22. Apparatus according to claim 21 **characterised in that** the constant pressure in the reducing agent line (8) is produced by means for pressure production, in particular a pump (14).

23. Apparatus according to one of claims 13 to 22 **characterised in that** the reducing agent is introduced from the reducing agent reservoir (7) by way of the reducing agent line (8) and the metering valve (9) at the exhaust gas outlet (3) of each respective combustion chamber (2) of the internal combustion engine (1) and mixed with the exhaust gas.

24. Apparatus according to one of claims 13 to 23 **characterised in that** the reducing agent is introduced from the reducing agent reservoir (7) by way of the reducing agent line (8) and the metering valve (9) jointly for the exhaust gas of all combustion chambers (2) of the internal combustion engine (1) into the exhaust pipe (5) and mixed with the exhaust gas.

## Revendications

1. Procédé de purification d'un gaz d'échappement contenant de l'oxyde d'azote (NO_{X}) d'un moteur à combustion interne (1) comportant au moins une chambre de combustion (2) avec une sortie de gaz d'échappement (3) à laquelle est raccordé un brin de gaz d'échappement (4) avec une conduite de gaz d'échappement (5) et au moins un convertisseur catalytique (6), dans quel cas une quantité d'agent réducteur est introduite d'un réservoir d'agent réducteur (7) à l'intermédiaire d'une conduite d'agent réducteur (8) dans le brin de gaz d'échappement (4) et est mélangée avec le gaz d'échappement y coulant et le convertisseur catalytique (6) est ensuite alimenté du mélange de gaz d'échappement-agent réducteur pour la conversion catalytique du NO_{X}, **caractérisé en ce que** la quantité d'agent réducteur est dosée préportionnée de façon répétée au gaz d'échappement en fonction de la génération de NO_{X} du moteur à combustion interne (1) pour chaque débit de gaz d'échappement hors de chaque chambre de combustion (2) au moyen d'au moins un dispositif doseur (9) et d'autres moyens de commande et/ou de moyens de réglage (10, 11, 12, 13) et en portions adaptées aux quantités respectivement générées de NO_{X}.

2. Procédé selon la revendication 1, **caractérisé en ce que** l'agent réducteur est dosé au gaz d'échappement au moyen d'au moins deux dispositifs doseurs (9) qui sont agencés entre la conduite d'agent réducteur (8) et le brin de gaz d'échappement (4).

3. Procédé selon la revendication 1 ou 2, **caractérisé en ce que** chaque dispositif doseur (9) commande le flux d'agent réducteur à proximité directe de l'endroit d'introduction, où l'agent réducteur est dosé au gaz d'échappement.

4. Procédé selon l'une des revendications précédentes, dans quel cas le moteur à combustion interne (1) a une commande électronique de moteur (10), **caractérisé en ce qu'**à partir de données et de valeurs de mesure présentes et/ou arrivantes pour la commande et/ou le réglage du moteur à combustion interne (1) des signaux destinés à la commande et/ou au réglage du dispositif doseur (9) sont également générés dans la commande électronique de moteur (10).

5. Procédé selon l'une des revendications précédentes, **caractérisé en ce que** le convertisseur catalytique (6) ne stocke le NO_{X} et/ou l'agent réducteur que dans l'étendue de fluctuations réglantes.

6. Procédé selon l'une des revendications précédentes, **caractérisé en ce que** l'agent réducteur est introduit respectivement à la sortie de gaz d'échappement (3) de chaque chambre de combustion (2) du moteur à combustion interne (1) et est mélangé avec le gaz d'échappement.

7. Procédé selon l'une des revendications 1 à 5, **caractérisé en ce que** l'agent réducteur est introduit en commun pour le gaz d'échappement de toutes les chambres de combustion (2) dans la conduite de gaz d'échappement (5) et est mélangé avec le gaz d'échappement.

8. Procédé selon l'une des revendications précédentes, **caractérisé en ce que** le réservoir d'agent réducteur (7) contient de l'ammoniac fluide comme agent réducteur qui est introduit dans le brin de gaz d'échappement (4).

9. Procédé selon l'une des revendications 1 à 7, **caractérisé en ce que** le réservoir d'agent réducteur (7) contient un précurseur stocké d'un agent réducteur, à partir duquel l'agent réducteur est fabriqué, par exemple de manière pyrolytique, et est introduit en tant que fluide dans le brin de gaz d'échappement (4).

10. Procédé selon la revendication 9, **caractérisé en ce que** de l'urée est utilisée comme précurseur stocké de l'agent réducteur ammoniac.

11. Procédé selon l'une des revendications précédentes, **caractérisé en ce que** l'agent réducteur est alimenté sous une pression constante dans la conduite d'agent réducteur (8), de sorte que les portions de l'agent réducteur devant être dosé sont déterminées au moyen des durées d'ouverture du dispositif doseur (9).

12. Procédé selon la revendication 11, **caractérisé en ce que** la commande et/ou le réglage des durées d'ouverture du dispositif doseur (9) est effectué notamment en fonction de la consommation relative à une alimentation en carburant au moyen d'une connexion électrique (11) par les signaux générés dans la commande électronique du moteur (10) en fonction des valeurs de mesure y étant présentes et/ou arrivantes, qui proviennent par exemple de capteurs (12, 13).

13. Dispositif de purification d'un gaz d'échappement contenant de d'oxyde d'azote (NO_{X}) d'un moteur à combustion interne (1) comportant au moins une chambre de combustion (2) avec une sortie de gaz d'échappement (3) à laquelle est raccordé un brin de gaz d'échappement (4) avec une conduite de gaz d'échappement (5) et au moins un convertisseur catalytique (6), dans quel cas un agent réducteur peut être introduit d'un réservoir d'agent réducteur (7) à l'intermédiaire d'une conduite d'agent réducteur (8) dans le brin de gaz d'échappement (4) et peut être mélangé avec le gaz d'échappement s'y écoulant et dans quel cas le mélange gaz d'échappement-agent réducteur peut ensuite être amené au convertisseur catalytique (6) pour la conversion catalytique du. NO_{X}, **caractérisé en ce qu'**il y a au moins un dispositif doseur (9) et des moyens de commande et/ou des moyens de réglage (10, 11, 12, 13) pour le dosage répété préportionné de l'agent réducteur par cycle de travail au gaz d'échappement en fonction de la génération de NO_{X} du moteur à combustion interne (1).

14. Dispositif selon la revendication (13), **caractérisé en ce que** l'agent réducteur est dosé au gaz d'échappement au moyen d'au moins deux dispositifs doseurs (9) qui sont agencés entre la conduite d'agent réducteur (8) et le brin de gaz d'échappement (4).

15. Dispositif selon la revendication 13 ou 14, **caractérisé en ce que** chaque dispositif doseur (9), présentant notamment au moins une vanne de dosage (9), est agencé entre la conduite d'agent réducteur (8) et le brin de gaz d'échappement (4), notamment à proximité directe de l'endroit d'introduction où l'agent réducteur est dosé au gaz d'échappement, et commande le flux d'agent réducteur.

16. Dispositif selon la revendication 13, **caractérisé en ce que** dans l'étendue de fluctuations réglantes le convertisseur catalytique (6) a une petite capacité de stockage pour le NO_{X} et/ou l'agent réducteur.

17. Dispositif selon la revendication 13, dans quel cas le moteur à combustion interne (1) présente une commande électronique de moteur (10), **caractérisé en ce que** le dispositif doseur (9) est commandé et/ou réglé par la commande électronique de moteur (10) et au moyen d'autres moyens de commande et/ou de moyens de réglage (11, 12, 13), notamment par une connexion électrique (11).

18. Dispositif selon la revendication 17, **caractérisé en ce qu'**au moins un premier capteur (12) est agencé en amont et/ou un deuxième capteur (13) est agencé en aval du convertisseur catalytique (6), le premier capteur (12) transmettant notamment des valeurs de mesure de NO_{X} ou de NH₃ et le deuxième capteur (13) transmettant notamment des valeurs de mesure de NO_{X}, de NH₃ ou de NO à la commande électronique de moteur (10).

19. Dispositif selon la revendication 13, **caractérisé en ce que** le réservoir d'agent réducteur (7) contient de l'ammoniac fluide comme agent réducteur qui est introduit dans le brin de gaz d'échappement (4).

20. Dispositif selon la revendication 13, **caractérisé en ce qu'**il y a des moyens pour par exemple la fabrication pyrolytique d'ammoniac fluide à partir d'un précurseur stocké, notamment à partir d'urée.

21. Dispositif selon l'une des revendications 13 à 20, **caractérisé en ce que** l'agent réducteur est alimenté sous une pression constante dans la conduite d'agent réducteur (8), de sorte que les portions de l'agent réducteur devant être dosé sont déterminées par les durées d'ouverture de chaque vanne de dosage (9).

22. Dispositif selon la revendication 21, **caractérisé en ce que** la pression constante dans la conduite d'agent réducteur (8) est générée par des moyens de génération de pression, notamment une pompe (14).

23. Dispositif selon l'une des revendications 13 à 22, **caractérisé en ce que** l'agent réducteur est introduit du réservoir d'agent réducteur (7) respectivement au niveau de la sortie de gaz d'échappement (3) de chaque chambre de combustion (2) du moteur à combustion interne (1) à l'intermédiaire de la conduite d'agent réducteur (8) et de la vanne de dosage (9) et est mélangé avec le gaz d'échappement.

24. Dispositif selon l'une des revendications 13 à 23, **caractérisé en ce que** l'agent réducteur est introduit du réservoir d'agent réducteur (7) dans la conduite de gaz d'échappement (5) à l'intermédiaire de la conduite d'agent réducteur (8) et de la vanne de dosage (9) en commun pour le gaz d'échappement de toutes les chambres de combustion (2) du moteur à combustion interne (1) et est mélangé avec le gaz d'échappement.
